# EUROPÄISCHE PATENTANMELDUNG

(11) **EP 4 414 797 A1**
(43) Veröffentlichungstag der Anmeldung: **14.08.2024**
(21) Anmeldenummer: 23155365.2
(22) Anmeldetag: 07.02.2023
(51) Int. Cl.: G05B 19/042, G05B 19/05

(54) **VERFAHREN UND ANORDNUNG ZUR BEREITSTELLUNG EINER KUNDENINDIVIDUELLEN ANWENDUNG IN INDUSTRIELLEN AUTOMATISIERUNGSANORDNUNGEN**

(71) Anmelder: Siemens Aktiengesellschaft, 80333 München (DE)
(72) Erfinder: RÖHRL, Thomas, 81675 München (DE); KARTOGLU, Selen, 45720 Istanbul (TR); MÖHRING, Jan, 96049 Bamberg (DE); OZER, Talha, 91058 Erlangen (DE); DU, Duc Tuan David, 22143 Hamburg (DE)
(74) Vertreter: Siemens Patent Attorneys

(57) **Zusammenfassung**

Die Erfindung betrifft ein Verfahren und eine Anordnung zur Bereitstellung einer kundenindividuellen Anwendung in industriellen Automatisierungsanordnungen (A1, A2) mit jeweils einer Anzahl Automatisierungskomponenten (IED), wobei für jede industrielle Automatisierungsanordnung (A1, A2) vorgesehen ist, dass aus einem öffentlichen Anwendungsspeicher (MP), insbesondere einem App-Store, kommerzielle Anwendungen geladen und in zumindest einen lokalen Anwendungsspeicher (H1, H2 - *"*Hubs*"*) übertragen werden, wobei die kommerziellen Anwendungen aus dem lokalen Anwendungsspeicher (H1, H2) auf eine Anzahl diesem lokalen Anwendungsspeicher (H1, H2) zugeordneten industrieller Automatisierungskomponenten geladen und dort ausgeführt werden. Dabei wird die kundenindividuelle Anwendung in einem der lokalen Anwendungsspeicher (H1, H2) gespeichert und den diesem lokalen Anwendungsspeicher (H1, H2) zugeordneten Automatisierungskomponenten zum Download und zur Nutzung zur Verfügung gestellt, wobei die kundenindividuelle Anwendung aus diesem lokalen Anwendungsspeicher (H1, H2) zu einem weiteren lokalen Anwendungsspeicher (H1, H2) übertragen und den diesem lokalen Anwendungsspeicher (H1, H2) zugeordneten Automatisierungskomponenten (IED) zum Download und zur Nutzung zur Verfügung gestellt wird. Durch dieses vorgeschlagene Hub-zu-Hub-Übertragungsverfahren wird eine anspruchsvolle Multi-Tenancy-Architektur sowie eine state-of-the-art Nutzerrechteverwaltung auch für Anwendungen ermöglicht, die nicht über den offiziellen Marketplace distribuiert werden.

## Beschreibung

Automatisierungskomponenten von industriellen Automatisierungsanordnungen, beispielsweise speicherprogrammierbare Steuerungen und andere mikroprozessorgesteuerte Geräte, werden mit Steuerungsprogrammen, Bedien- und Beobachtungsprogrammen (HMI - Human Machine Interface) und anderen Anwendungen programmiert. Klassischerweise wird dazu auf die vorbereiteten Geräte, die beispielsweise eine Firmware, ein Betriebssystem, eine virtuelle Maschine oder andere Laufzeitumgebungen bereitstellen, das Anwendungsprogramm oder Automatisierungsprogramm, kurz: die Anwendung oder "App", übertragen und zur Ausführung gebracht.

Dies gilt prinzipiell auch für die neuartigen industriellen EDGE-Geräte, das sind Computer oder Server, die sowohl an einem Automatisierungsnetzwerk, als auch optional an ein öffentliches Netzwerk (zum Beispiel Internet) angebunden sind und die in der Regel einen industriellen Prozess oder Vorgang nicht direkt steuern, sondern beispielsweise Rechenkapazitäten bereitstellen, das Bindeglied zwischen öffentlichen und privaten Netzwerken darstellen und andere, beispielsweise zentralisierte Aufgaben übernehmen. Auch für diese Geräte werden Anwendungen benötigt, in diesem Fall oft auch in Form eines Containers (z.B. sog. Docker-Container) in eine von vielen gekapselten Laufzeitumgebungen (Container Runtime Environment) übertragen und dort ausgeführt werden.

Während im klassischen Fall der Automatisierungstechnik die Anwendungen oder andere Software von einem Engineering-System erstellt und bereitgestellt werden, wobei das Engineering-System meist direkten Zugang zu den programmierenden Geräten, beispielsweise die speicherprogrammierbaren Steuerungen oder HMI-Geräte, hat, wird heutzutage vermehrt Software von dritter Seite eingesetzt, also beispielsweise von kommerziellen Anbietern oder von Dienstleistern, die nicht direkt an ein Automatisierungsnetzwerk oder an die zu programmierenden Geräte angebunden sind.

In der Konsumgüter-Technologie, insbesondere bei Mobilfunkgeräten, Tablet-PCs und dergleichen, hat es sich durchgesetzt, Anwendungen von einem netzgestützten Server, einem sogenannten Marketplace (Marktplatz) in Form eines sog. "App-Store" (z.B. Apple App Store, Google Play Store, Microsoft Store, ...), zu beziehen. Neben dem Komfort für den Anwender haben solche Lösungen den Vorteil, dass die dort gespeicherten Anwendungen in der Regel geprüft sind, mittels Signaturen, Zertifikaten und anderen Mechanismen gegen Manipulation geschützt sind, dass auf einfache Weise Updates bereitgestellt werden können und dergleichen. Für die Anbieter der Anwendungen haben solche zentralen Bereitstellungen, also die App-Stores, den Vorteil, dass Vertrieb und Distribution mittels ein- und derselben Plattform bewerkstelligt werden können. Durch die zentrale Bereitstellung hat ein Anwender eine gewisse Kontrolle darüber, welche Anwendung von welchem Kunden geladen, betrieben und upgedated wird.

Diese Vorteile möchte man sich auch im Kontext der industriellen Automatisierungsanordnung zu Nutze machen, jedoch bestehen im industriellen Bereich erhöhte Anforderungen beispielsweise an die Sicherheit und an die Verfügbarkeit der Software-Bereitstellung. Im Gegensatz zu den Lösungen aus dem Konsumerbereich werden daher die industriellen Geräte, insbesondere die EDGE-Geräte, deswegen regelmäßig nicht direkt aus einem öffentlichen App-Store "abgefüllt", sondern die bereitgestellte oder gekaufte Software bzw. die zu verwendenden Anwendungen werden in einen lokalen Anwendungsspeicher des Kunden, genauer gesagt des Betreibers einer Automatisierungsanordnung, geladen und somit lokal verfügbar gemacht.

Anstelle der Begriffe Kunden oder Betreiber wird dabei häufig der Begriff "Tenant" für eine Organisationseinheit verwendet, die eine Anwendung kauft oder lizensiert und in einer Automatisierungsanordnung, die aus einer Anzahl Geräten (Automatisierungskomponenten) besteht, gemäß Lizenzbedingungen einmal oder auf mehreren Geräten betreiben darf. Sofern im Folgenden die Begriffe Kunden, Betreiber oder dgl. verwendet werden, sind damit regelmäßig die sog. Tenants als wirtschaftliche oder organisatorische Einheit gemeint.

Das beschriebene Konzept hat sich bewährt für kommerzielle Anwendungen, die von einem beliebigen Anbieter von Anwendungssoftware für eine Vielzahl von Kunden (Tenants) bereitgestellt werden oder die zumindest von einem Kunden oder wenigen Kunden auf eine Vielzahl von Geräten geladen werden sollen. Für anwendungsspezifische Programme und Anwendungen, die speziell für einen Kunden oder einen Anwendungsfall angepasst sind oder sie sich noch im Prototypen-Stadium befinden und daher noch nicht kommerziell verfügbar sein sollen, hat das beschriebene Verfahren der Distribution aber auch Nachteile. Jede geänderte Version, jeder Prototyp oder dergleichen muss über den App-Store verfügbar gemacht werden und damit wie eine kommerzielle Anwendung Prüfungen und Zertifizierungen durchlaufen und in den Distributionsmechanismus eingepflegt werden, wobei spezielle Maßnahmen getroffen werden müssen, so dass der Prototyp oder dergleichen nicht für alle Kunden oder Marktteilnehmer sichtbar oder verfügbar ist, sondern nur für eine speziell adressierte Automatisierungsanordnung oder einen speziell identifizierten Kunden bzw. Tenant. Oft haben Kunden auch den Wunsch, eigene Anwendungen zu erstellen, die nicht über den öffentlichen App-Store bereitgestellt werden sollen oder können. Zwar ist es theoretisch möglich, auch einen kundeneigenen App-Store aufzubauen, dies ist jedoch kompliziert oder zumindest aufwendig und führt außerdem dazu, dass die kundeneigenen Geräte oder zumindest ein lokaler "Hub", also ein lokaler Anwendungsspeicher, mit mehr als einem App-Store verbunden werden müssen, was oft entweder nicht möglich oder nicht gewollt ist.

Eine Alternative besteht darin, die genannten einzelnen ("kundenindividuellen") Anwendungen direkt auf die zu programmierende Geräte zu übertragen, beispielsweise durch einen direkten Dateitransfer oder die Nutzung von Speichermedien wie USB-Sticks oder dergleichen; dieses Umgehen der Appstore-Lösung mittels sog. Seitenkanäle wird auch als "Sideloading" bezeichnet. Grundsätzlich soll diese Möglichkeit bei industriellen Geräten jedoch blockiert sein, um Sicherheitsanforderungen zu erfüllen. Darüber hinaus verlangt dies oft einen direkten, physischen Zugang zu den Geräten oder zumindest zum lokalen Automatisierungsnetzwerk und außerdem ist ein solches Vorgehen in den Fällen, in denen mehrere Geräte mit der genannten Anwendung versorgt werden sollen, aufwendig.

Im industriellen Umfeld ist etabliert, die Automatisierungskomponenten, also beispielsweise industrielle Edge-Geräte, speicherprogrammierbare Steuerungen, Bedien- und Beobachtungsgeräte oder dgl., nicht direkt aus einem öffentlichen Anwendungsspeicher, also Appstore, Marketplace oder dgl., mit Anwendungen (Software) zu versehen, sondern die "kommerziellen" Anwendungen (kurz: Apps) zunächst aus dem öffentlichen Anwendungsspeicher in einen sog. lokalen Anwendungsspeicher (kurz: lokaler Hub) zu laden und von dort zu den lokalen, also diesem lokalen Anwendungsspeicher zugeordneten "lokalen" Automatisierungskomponenten weiterzugeben und somit lokal bereitzustellen. Der Begriff "lokal" in Bezug auf die Anwendungsspeicher bedeutet nicht, dass diese physisch lokal, also in demselben Automatisierungsnetzwerk wie die zugeordneten Automatisierungskomponenten, betrieben ("gehostet") werden müssen, sondern dass sie jeweils einer Anzahl Automatisierungskomponenten, vorzugsweise einer definierten Automatisierungsanordnung mit dieser zugeordneten Automatisierungskomponenten, zur Verfügung stehen, also insbesondere nur diesen die Anwendungen bereitstellen kann. Ein lokaler Anwendungsspeicher (Hub) selbst kann beispielsweise von einem Anbieter im Internet, einer Cloud oder an einem anderen Standort bereitgestellt werden, beispielsweise als cloudbasierter Dienst, gilt aber dennoch wegen seiner Zuordnung zu einer konkreten Automatisierungsanordnung, beispielsweise einer Fabrik oder einer Fertigungseinrichtung, als "lokaler" Anwendungsspeicher (lokaler Hub). Oft ist der Datentransfer zwischen dem "lokalen" Anwendungsspeicher und den zugeordneten Automatisierungskomponenten explizit freigeschaltet und geschützt, beispielsweise durch eine entsprechende Konfigurierung von Firewalls oder verschlüsselte Verbindungen. Zugriffe können von einem lokalen Anwendungs-Management-System kontrolliert oder gesteuert werden.

Es gibt heute also bereits mehrere Möglichkeiten der Weitergabe von Applikationen, welche jedoch grundlegende und starke Einschränkungen mit sich bringen:
1. Verkauf / Distribution über Marktplatz: Hier muss der Applikationsentwickler ein aufwändiges kommerzielles "onboarding" durchlaufen. Darüber hinaus hat er keine Möglichkeit, die Anwendung auf anderem Wege zusätzlich zum Marktplatz zu distribuieren. Auch Auftragsentwicklungen oder Testversionen können so nicht verteilt werden. Dem Verkäufer ist es nicht möglich, einzelne Kunden abzulehnen. Darüber hinaus besteht die Kundenbeziehung verstärkt zum Marktplatzanbieter.
2. Nutzung von Seitenkanälen / Sideloading: App-Files (Dateien mit Anwendungen) werden beispielsweise als gepackte Docker-Container mit Hilfe von Filesharing Tools (Secufex, Dropbox, E-Mail, etc.) oder via USB-Stick zwischen Anbieter (Provider) und Kunden (Tenant) geteilt. Der Empfänger (Kunde) muss die App dann direkt auf die zu programmierenden Geräte aufspielen oder in einen von ihm verwalteten "Hub" (lokalen Anwendungsspeicher) bzw. ein sog. Management-System laden. Im letzteren Fall muss der Hub dazu freigeschaltet sein. Hier entstehen zwangsweise große Sicherheitsrisiken, welche der Empfänger auf diesem Weg in vollem Umfang zu tragen hat (Cybersecurity, Compatibility, Authenticity, etc.). Der Versender (Provider) hat darüber hinaus keinerlei Kontrolle darüber, wie, wo oder in welchem Umfang die von ihm übermittelten Apps genutzt werden und ob etwaige vertragliche Zusagen auch eingehalten werden. Darüber hinaus riskiert der Provider massive Eingriffe in seine IP (Intellectual Property - geistiges Eigentum). Durch die Nutzung solcher Seitenkanäle erhöht sich außerdem die Fehlerquote (falsche Version, Fehler bei Konfiguration, Inkompatibilitäten) exponentiell, während gleichzeitig die Prozessdurchlaufzeit stark erhöht wird.

Es ist also eine Aufgabe der vorliegenden Erfindung, die Bereitstellung von einzelnen Anwendungen (sog. Kundenindividuelle Anwendungen) in einem industriellen Umfeld mit einer Appstore-basierten Distribuieren von Software zu verbessern.

Die Aufgabe wird gelöst durch die Möglichkeit, Anwendungen auf kontrollierte Weise von einem Hub zu einem anderen Hub zu übertragen, und zwar je nach Konfiguration auch Tenantübergreifend.

Durch einen solchen Hub-zu-Hub Transfer (kurz Hub2Hub Transfer) hat der Nutzer komplette Transparenz und Kostenkontrolle, um mit wenigen Klicks Software bereitzustellen, während der unsichere Versand durch Seitenkanäle viel manuelle Arbeit und eine deutlich längere Prozessdauer verursacht. Weiterhin könnte der Distributionskanal "sideloading" damit in Zukunft sogar komplett verhindert werden, sodass diese heute viel genutzte Möglichkeit später keine Rolle mehr spielen wird.

Mit der "Hub2Hub Transfer"-Technologie ermöglicht man es industriellen Kunden, ihr Domänenwissen in Form von Anwendungen, insbesondere sog. Edge-Apps, mit anderen Organisationen zu teilen und diese somit auch zu monetarisieren. Dabei zielt der Hub2Hub-Transfer auf Anwender von Industrial Edge ab, welche spezifische (Test-) Versionen und auftragsgefertigte Anwendungen ("kundenindividuelle Anwendungen") ausliefern wollen, ohne jedoch zwangsläufig an einem öffentlichen Marktplatz (Marketplace, Appstore) zu partizipieren.

Prinzipiell lassen sich damit folgende Anwendungsszenarien realisieren:
- Ein Kunde möchte selbstgeschriebene Applikationen zwischen verschiedenen IEHub Tenants (Industrial Edge Anwendungsspeicher eines Kunden oder einer Organisationseinheit - beispielsweise unterschiedliche Organisationseinheiten oder regionale Länderinstanzen) hin- und herbewegen.
- Ein Kunde möchte mit einem App Provider in co-creation (gemeinsame Produktgestaltung) gehen und dabei schnell Zugriff auf Beta-versionen einer Anwendung haben.
- Ein Provider möchte seine App nur an einen speziellen Kundenkreis provisionieren, da die App stark angepasst ("customized") ist und über besonderes Domänenwissen verfügt.

Die Aufgabe wird insbesondere durch ein Verfahren gemäß Patentanspruch 1 und durch eine Vorrichtung gemäß Patentanspruch 10 gelöst.

Dabei wird ein Verfahren zur Bereitstellung einer kundenindividuellen Anwendung in industriellen Automatisierungsanordnungen mit jeweils einer Anzahl Automatisierungskomponenten vorgeschlagen, wobei für jede industrielle Automatisierungsanordnung vorgesehen ist, dass aus einem öffentlichen Anwendungsspeicher, insbesondere einem App-Store, kommerzielle Anwendungen geladen und in zumindest einen lokalen Anwendungsspeicher übertragen werden, und wobei die kommerziellen Anwendungen aus dem lokalen Anwendungsspeicher auf eine Anzahl diesem lokalen Anwendungsspeicher zugeordneten industrieller Automatisierungskomponenten geladen und dort ausgeführt werden. Dabei wird die kundenindividuelle Anwendung in einem der lokalen Anwendungsspeicher gespeichert und den diesem lokalen Anwendungsspeicher zugeordneten Automatisierungskomponenten zum Download und zur Nutzung zur Verfügung gestellt, wobei die kundenindividuelle Anwendung aus diesem lokalen Anwendungsspeicher zu einem weiteren lokalen Anwendungsspeicher übertragen und den diesem lokalen Anwendungsspeicher zugeordneten Automatisierungskomponenten zum Download und zur Nutzung zur Verfügung gestellt wird. Durch dieses vorgeschlagene Hub2Hub-Übertragungsverfahren wird eine anspruchsvolle Multi-Tenancy-Architektur sowie eine state-of-the-art Nutzerrechteverwaltung auch für Anwendungen ermöglicht, die nicht über den offiziellen Marketplace distribuiert werden.

Die Aufgabe wird außerdem durch einen Anwendungsspeicher für eine industrielle Automatisierungsanordnung gelöst, wobei der Anwendungsspeicher als lokaler Anwendungsspeicher zum Laden von kommerziellen Anwendungen aus einem öffentlichen Anwendungsspeicher, insbesondere einem App-Store, und eingerichtet ist, und wobei der lokale Anwendungsspeicher dazu eingerichtet ist, geladene Anwendungen zumindest einer der Automatisierungsanordnung zugehörigen Automatisierungskomponente zur Verfügung zu stellen, insbesondere zum Download und zur Ausführung. Dabei ist der lokale Anwendungsspeicher zum Empfang einer kundenindividuellen Anwendung aus einer anderen Quelle als dem öffentlichen Anwendungsspeicher eingerichtet, wobei die andere Quelle insbesondere ein der Automatisierungsanordnung zugeordnetes Entwicklungssystem ist, wobei der lokale Anwendungsspeicher zur Übertragung zumindest der kundenindividuellen Anwendung zu einem anderen lokale Anwendungsspeicher eingerichtet ist, und wobei der lokale Anwendungsspeicher zum Empfang einer übertragenen Anwendung von einem anderen lokalen Anwendungsspeicher eingerichtet ist. Mittels dieser Vorrichtung können, die bereits anhand des Verfahrens erläuterten Vorteile erreicht werden.

Vorteilhafte Ausgestaltungen der Erfindung sind in den abhängigen Patentansprüchen angegeben. Die dabei beschriebenen Merkmale und deren Vorteile können sowohl einzeln als auch in sinnfälliger Kombination miteinander realisiert werden. Vorteilhafte Ausgestaltungen des Verfahrens gelten sinngemäß auch für die erfindungsgemäße Vorrichtung, und umgekehrt.

In einer vorteilhaften Ausgestaltung ist vorgesehen, dass einer oder jeder Anwendung eine Weiterleitungsinformation zugeordnet ist, wobei im Zuge des Transfers von einem lokalen Anwendungsspeicher zu einem weiteren Anwendungsspeicher eine Erfüllung der Weiterleitungsinformation geprüft und ggf. der Transfer entsprechend eingeschränkt oder freigegeben wird, wobei die Weiterleitungsinformation zumindest eine der nachfolgend beschriebenen Informationen darüber umfasst, ob eine Übertragung überhaupt gestattet ist, wie oft eine Übertragung erlaubt ist, wie oft und/oder wie lange eine Installation oder ein Betrieb der jeweiligen Anwendung auf Automatisierungskomponenten, die dem Ziel-Anwendungsspeicher zugeordnet sind, erlaubt ist, oder ob und die Übertragung zu einem lokalen Anwendungsspeicher einer anderen als der Automatisierungsanordnung mit dem übertragenden lokalen Anwendungsspeicher gestattet ist. Diese Ausgestaltung kann sowohl kommerzielle als auch kundenindividuelle Anwendungen betreffen. Somit ist es einem Provider, der die jeweilige Anwendung bereitstellt, möglich, die Weiterleitung und Nutzung der jeweiligen Anwendung zu kontrollieren. Insbesondere ist es möglich, dass entsprechende Anweisungen oder Reglementierungen zur Weitergabe von Anwendungen untrennbar mit diesen verknüpft werden, sodass auch eine weitergeleitete Anwendung weiterhin diesen Regularien untersteht. Die Anwendungsspeicher (Hubs) sind dabei vorteilhaft dazu eingerichtet, die entsprechenden Informationen über die Einschränkungen auszuwerten, umzusetzen und gegebenenfalls auch erfolgte weitergaben oder Nutzungen einer Anwendung zu protokollieren und an den Ersteller oder Eigentümer der Anwendung zu melden.

In diesem Zusammenhang ist einer oder jeder Automatisierungsanordnung oder lokalen Anwendungsspeicher bzw. dem Betreiber - kurz: Tenant - vorteilhaft eine Identitätsinformation, insbesondere eine Firmenidentität, zugeordnet, wobei in der Weiterleitungsinformation eine Anzahl erlaubter Identitäten definiert wird, wobei eine Übertragung nur an einen solchen weiteren lokalen Anwendungsspeicher (Hubs) erlaubt ist, dem bzw. dessen "Tenant" selbst dieselbe Identitätsinformation zugeordnet ist, oder der einer Automatisierungsanordnung mit derselben zugeordneten Identitätsinformation zugeordnet ist, die also einer der erlaubten Identitäten entspricht, wobei im Zuge des Transfers der Anwendung diese Entsprechung geprüft und die ggf. der Transfer entsprechend eingeschränkt oder freigegeben wird. Im Falle einer limitierten Anzahl von Weiterleitungen wird mit jeder Weiterleitung ein Zähler oder "Account" dafür dekrementiert. Lizenzen zur Weiterleitung können gegebenenfalls auch erworben werden, wozu beispielsweise erforderliche Lizenzen über einen Appstore erworben werden können.

Vorteilhaft wird zumindest die in der Weiterleitungsinformation definierte zu übertragende Anwendung mit einer manipulationsgeschützten Signatur signiert, damit nicht über den Hub2Hub-Transfer unsignierte und damit potenziell manipulierte Anwendungen in Verkehr gebracht werden können.

Es kann vorgesehen sein, dass - abhängig von erworbenen Lizenzen - nur kundenindividuelle Anwendungen zwischen Anwendungsspeichern (Hubs) weiterleitbar sind; ferner kann vorgesehen sein, dass beide beteiligten Anwendungsspeicher demselben Tenant oder derselben Tenant-Gruppe angehören müssen. In einer Ausgestaltung kann aber auch weiter vorgesehen sein, dass eine kommerzielle Anwendung gemäß einem der vorstehend beschriebenen Verfahren mit einer - ggf. beschränkten - Lizenz zur Weiterleitung versehen (bzw. eine solche erworben werden kann) und von einem lokalen Anwendungsspeicher zu einem weiteren lokalen Anwendungsspeicher übertragen wird. Beispielsweise kann vorgesehen sein, dass eine solche Anwendung nur für Testzwecke weitergeleitet wird und dazu automatisch mit einer zeitlichen und/oder funktionalen Limitierung versehen wird.

Es können dem lokalen Anwendungsspeicher eine Anzahl Lizenzen für Übertragungen von Anwendungen zugeordnet werden, wobei mit jeder Übertragung eine der Lizenzen entwertet wird, und wobei eine Übertragung nur dann stattfindet, wenn eine freie Lizenz dazu vorhanden ist. Diese Lizenzen können bevorzugt aus dem öffentlichen Anwendungsspeicher (Marketplace, Appstore) oder aus einem separaten Lizenzserver (lokaler oder globaler Lizenzserver) bezogen werden. Grundsätzlich kann eine Lizenz mit einer Anzahl Bedingungen versehen sein, insbesondere darüber, ob nur kundenindividuelle oder auch kommerzielle Anwendungen übertragen werden dürfen, ob an lokale Anwendungsspeicher der eigenen Automatisierungsanordnung bzw. des eigenen "Tenants" oder auch an lokale Anwendungsspeicher einer anderen Automatisierungsanordnung (fremder Tenant) übertragen werden darf, und/oder hinsichtlich der maximalen Betriebsdauer oder anderer Performance-Kriterien einer mit der jeweiligen Lizenz übertragenen Anwendung. Natürlich können auch die Anwendungen selbst mit (zusätzlichen oder anderen) diesbezüglichen Einschränkungen versehen sein.

In einer vorteilhaften Variante wird jede der Automatisierungskomponente einem, bevorzugt genau einem, lokalen Anwendungsspeicher zugeordnet und aus diesem mit Anwendungen versorgt, was die Sicherheit des Systems erhöht. Analog dazu wird vorteilhaft jeder Automatisierungsanordnung bzw. jedem Tenant ein, bevorzugt genau ein, eigener lokaler Anwendungsspeicher zugewiesen oder zugefügt.

In einer bevorzugten Variante werden industrielle Edge-Geräte als Ziel-Automatisierungskomponente für die Anwendungen verwendet, denn solche Edge-Geräte lassen sich gut mit Software-Containern laden, die monolithisch mit Anwendungsspeichern verwaltet werden können.

Vorhandene Anwendungsspeicher (Hubs) lassen sich nahezu unverändert in das vorgeschlagene Konzept integrieren, wenn für den Hub2Hub-Transfer dieselben Protokolle verwendet werden, mit denen auch die kommerziellen Anwendungen aus dem öffentlichen Anwendungsspeicher (Marketplace, Appstore) bezogen werden. Umgekehrt kann für den ausgehenden Transfer ein lokaler Anwendungsspeicher gegenüber dem Ziel-Anwendungsspeicher ein öffentlichen Anwendungsspeicher (Marketplace, Appstore) durch Verwendung der üblichen Protokolle "simulieren" und somit notwendige spezifische Anpassungen der Anwendungsspeicher reduzieren oder gar vollkommen obsolet machen.

Ein Ausführungsbeispiel des erfindungsgemäßen Verfahrens wird nachfolgend anhand der Zeichnungen erläutert. Dies dient gleichzeitig der Erläuterung eins erfindungsgemäßen Anwendungsspeicher bzw. einer erfindungsgemäßen Anordnung.

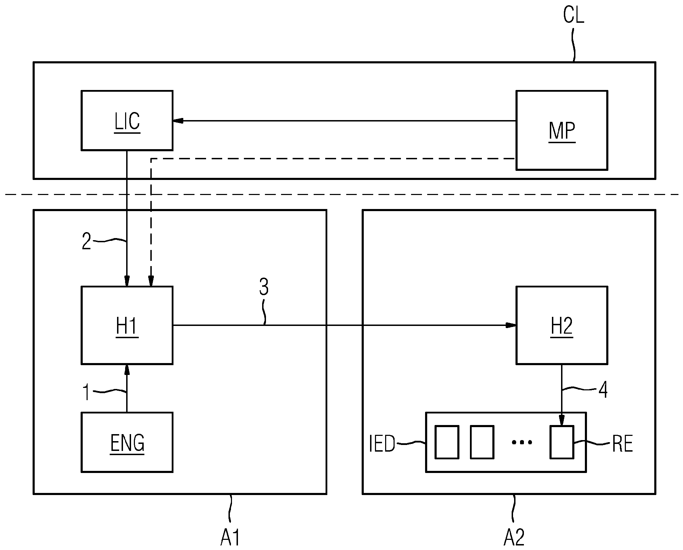

Dabei zeigt die einzige Figur in schematischer Darstellung ein öffentliches Netzwerk (Cloud, Internet) mit einem öffentlichen Anwendungsspeicher, und einen privaten, industriellen Bereich mit zwei Automatisierungsanordnung und zwei lokalen Anwendungsspeichern.

Die Figur zeigt ein typisches Szenario einer industriellen Automatisierungsumgebung mit zwei Automatisierungsanordnungen A1, A2, von denen zunächst angenommen wird, dass sie derselben Firma oder Organisationseinheit, kurz: Tenant, angehören. Die Automatisierungsanordnungen A1, A2 gehören einem oder mehreren privaten Automatisierungsnetzwerken an, die mittels einer nicht dargestellten Einrichtung (Gateway, Router oder dergleichen) mit einem öffentlichen Netzwerk CL (Cloud; Internet) verbunden sind. In der Cloud CL ist ein öffentlicher Anwendungsspeicher MP (Marketplace, Marktplatz, Appstore) angeordnet. Die Automatisierungsanordnungen A1, A2, die beispielsweise getrennte Fabrikationseinrichtungen eines Herstellers von industriellen Gütern sein können, weisen jeweils einen lokalen Anwendungsspeicher H1, H2 (Hub) auf bzw. haben jeweils auf einen solchen Zugriff; der lokale Anwendungsspeicher kann also jeweils auch beispielsweise in der "Cloud" betrieben (gehostet) werden. Der jeweilige lokale Anwendungsspeicher H1, H2 ist mit jeweiligen lokalen industriellen Automatisierungskomponenten verbunden, wobei in der Figur aus Gründen der Übersichtlichkeit nur für die Automatisierungsanordnung A2 als Automatisierungskomponente IED ein industrielles EDGE-Device (Edge-Gerät) gezeigt ist, welches durch den lokalen Anwendungsspeicher H2 mit Software versorgt wird. Dabei weist die Automatisierungskomponente IED verschiedene Laufzeitumgebungen RE (Runtime Environment) auf, die im vorliegenden Ausführungsbeispiel zur Ausführung von Anwendungen ausgestaltet sind, die in Software-Containern, sogenannten Docker-Containern, gefasst sind.

In der Automatisierungsanordnung A1 ist das Engineeringsystem ENG angeordnet, welches der Erstellung oder Bearbeitung von industriellen Anwendungen dient. In anderen Ausführungsbeispielen kann das Engineeringsystem ENG aber auch außerhalb der Automatisierungsanordnung A1, A2 angeordnet sein; für die hier benötigte Funktionalität ist lediglich wichtig, dass eine kundenindividuelle Anwendung bereitgestellt wird.

Im klassischen Fall werden Anwendungen aus dem öffentlichen Anwendungsspeicher MP bezogen und im Bereich der Consumertechnik direkt auf zu programmierende Geräte (Computer, Mobiltelefone etc.) übertragen. Im hier gegenständlichen industriellen Umfeld werden die kommerziellen Anwendungen aber aus dem öffentlichen Anwendungsspeicher MP zunächst in "lokale" Anwendungsspeicher H1, H2 übertragen; dies ist in der Figur durch eine gestrichelte Linie zwischen dem öffentlichen Anwendungsspeicher MP und dem lokalen Anwendungsspeicher H1 dargestellt.

Zur Bereitstellung oder "Veröffentlichung" einer durch das Engineeringsystem ENG bereitgestellten kundenindividuellen Anwendung wird diese in den in Bezug auf das Engineeringsystem ENG lokalen Anwendungsspeicher H1 übertragen; dies ist mit dem Pfeil 1 angedeutet. Der lokale Anwendungsspeicher bezieht spätestens mit einem Auftrag, diese kundenindividuelle Anwendung weiterzuleiten, eine dafür benötigte Lizenz LIC, was in der Figur durch den Pfeil 2 dargestellt ist. In üblichen Szenarien sind entsprechende Lizenzen meist schon vorher in ausreichender Anzahl in dem lokalen Anwendungsspeicher H1 gespeichert oder durch diesen zugreifbar. Eine Lizenz LIC kann vorzugsweise von dem öffentlichen Anwendungsspeicher MP bezogen bzw. erworben werden; dies ist durch den Pfeil zwischen der Instanz MP und der Lizenz LIC angedeutet. Andere Wege zur Versorgung mit Lizenzen sind möglich. In anderen Fällen kann beispielsweise auch auf die Verwendung von einzelnen Lizenzen verzichtet werden und stattdessen eine Dauerlizenz vorliegen. Es ist auch möglich, dass - beispielsweise durch das Engineeringsystem ENG - die Anwendung mit einer entsprechenden Lizenz versehen bzw. verknüpft worden ist.

In einem möglichen Anwendungsfall soll nun die kundenindividuelle Anwendung nicht in der Domäne der Automatisierungsanordnung A1 verwendet werden, sondern zur Programmierung einer industriellen Automatisierungskomponente IED der Automatisierungsanordnung A2 verwendet werden. Dazu wird der Transfer der Anwendung von dem lokalen Anwendungsspeicher H1 zu dem lokalen Anwendungsspeicher H2 initiiert. Vor der Ausführung dieses Transfers, der mit dem Pfeil 3 gekennzeichnet ist, prüft der lokale Anwendungsspeicher H1 oder eine mit diesem verknüpfte Komponente, beispielsweise ein Lizenzierungsserver, ob eine entsprechende Lizenz zur Übertragung vorliegt und ob etwaige Einschränkungen, die mit der in Rede stehenden kundenindividuellen Anwendung verknüpft und beispielsweise in sog. Meta-Informationen der Anwendung niedergelegt sind, für die Übertragung erfüllt sind. Dann wird die genannte Anwendung zu dem lokalen Anwendungsspeicher H2 übertragen, dort gespeichert und den lokalen Automatisierungskomponenten IED der Automatisierungsanordnung A2 zur Verfügung gestellt, wobei im vorliegenden Ausführungsbeispiel die genannte Anwendung in eine Ausführungsumgebung RE der Automatisierungskomponente IED übertragen wird - dies ist durch den Pfeil 4 dargestellt worden.

Auch dieser letzte Schritt geschieht im Einklang mit den üblichen Verfahrensweisen im Stand der Technik, was bedeutet, dass die kundenindividuelle Anwendung mit weiteren Restriktionen oder Lizenzen versehen sein kann, wonach beispielsweise die Anzahl der "Deployments", also die Anzahl der erlaubten Installationen, beschränkt ist. Auch andere Einschränkungen, beispielsweise hinsichtlich Einsatzdauer, Performance und anderer Kriterien sind vorgebbar und werden durch den lokalen Anwendungsspeicher H2 umgesetzt.

Durch dieses vorgeschlagene Hub2Hub-Übertragungsverfahren (auch Hub-zu-Hub genannt) wird eine anspruchsvolle Multi-Tenancy-Architektur sowie eine state-of-the-art Nutzerrechteverwaltung auch für Anwendungen ermöglicht, die nicht über den offiziellen Marketplace (öffentlicher Anwendungsspeicher) distribuiert werden. So ist es einem Nutzer möglich, ausgewählte Versionen von Apps individuellen Empfängern (Kunden bzw. Tenants) feingranular zur Verfügung zu stellen. Wichtig hierbei ist, dass nur diejenigen Apps distribuiert werden können, welche man auch selbst erstellt hat oder die für solche Transfers freigegeben sind. Das geschieht vorteilhaft durch die Tenant-spezifische Signatur der Applikationen beim Upload in den Industrial Edge Hub (IEH), also den lokalen Anwendungsspeicher. Somit wird eine unerwünschte bzw. unberechtigte Weitergabe (auch von "gekauften" Apps, also kommerziellen Anwendungen) verhindert. Möglich ist hier dadurch ein Modell, welches das "Reselling", also die berechtigte Weitergabe, von Anwendungen ermöglicht.

Durch verschiedene Eingabefelder in einem Benutzerinterface des Engineeringsystems oder einer anderen Verwaltungskomponente wird die Zuordbarkeit sichergestellt, sodass der Empfänger-Tenant aufgelöst werden kann und durch eine mitgelieferte Nachricht auch verifiziert werden kann. Durch die enge Verzahnung mit einem Lizenz-Mechanismus der Industriellen Edge-Geräte ist es außerdem möglich, neben der eigentlichen Anwendung auch die Anzahl an Nutzungsrechte (Installationen oder Instanzen auf Edge Geräten) mitzusenden, sodass der Empfänger neben der Anwendung (App) auch die Anzahl der Installationen mitgesendet bzw. lizensiert bekommt. Der Empfänger wird z.B. per E-Mail sowie über ein Benachrichtigungsmenü im lokalen Anwendungsspeicher (Industrial Edge Hub; Hub) über einen eingehenden Hub2Hub Transfer informiert. Nun kann der Empfänger die zugesandte App unter Zuhilfenahme der mitgeschickten Nachricht und einiger Metadaten ablehnen oder akzeptieren. Im Falle der Akzeptanz seitens des Empfängers wird die App mit der jeweils zugeschickten Anzahl an Lizenzen in einem Software-Katalog "IEH-Catalog") zur weiteren Installation verfügbar.

Vorteile ergeben sich hinsichtlich Security, Fälschungssicherheit, Zugriffsrechte-Verwaltung und Zuordbarkeit von Anwendungen zu Automatisierungsanordnungen, -komponenten und/oder "Tenants".

Erreichbare Vorteile: Ersparnis von Zeit und Aufwand (Ressourcen) bei besserer Kontrolle, Nachverfolgbarkeit und gleichzeitigem Versionsmanagement.

Technische Merkmale: Einfach Handhabbarkeit und volle Integration in den bestehenden App-Lifecycle-Prozess. Anwender können also basierend auf bestehenden Funktionen nun zusätzlich Apps über Hub-Grenzen hinweg provisionieren. Die Funktionalität von Hub2Hub Transfer kann jedem IEHub-Kunden (Industrial-Edge-Hub-Kunden) bereitstehen, lediglich die entsprechende Anzahl an Provisionierungsrechten (Lizenzen) kann über ebenfalls bestehende Kanäle (z.B. Marketplace) erworben werden.

## Patentansprüche

1. Verfahren zur Bereitstellung einer kundenindividuellen Anwendung in industriellen Automatisierungsanordnungen (A1, A2) mit jeweils einer Anzahl Automatisierungskomponenten (IED),
wobei für jede industrielle Automatisierungsanordnung (A1, A2) vorgesehen ist, dass aus einem öffentlichen Anwendungsspeicher (MP), insbesondere einem App-Store, kommerzielle Anwendungen geladen und in zumindest einen lokalen Anwendungsspeicher (H1, H2) übertragen werden, wobei die kommerziellen Anwendungen aus dem lokalen Anwendungsspeicher (H1, H2) auf eine Anzahl diesem lokalen Anwendungsspeicher (H1, H2) zugeordneten industrieller Automatisierungskomponenten geladen und dort ausgeführt werden,
**dadurch gekennzeichnet,**
**dass** die kundenindividuelle Anwendung in einem der lokalen Anwendungsspeicher (H1, H2) gespeichert und den diesem lokalen Anwendungsspeicher (H1, H2) zugeordneten Automatisierungskomponenten zum Download und zur Nutzung zur Verfügung gestellt wird, und
**dass** die kundenindividuelle Anwendung aus diesem lokalen Anwendungsspeicher (H1, H2) zu einem weiteren lokalen Anwendungsspeicher (H1, H2) übertragen und den diesem lokalen Anwendungsspeicher (H1, H2) zugeordneten Automatisierungskomponenten (IED) zum Download und zur Nutzung zur Verfügung gestellt wird.

2. Verfahren nach Patentanspruch 1,
**dadurch gekennzeichnet,**
**dass** einer oder jeder Anwendung eine Weiterleitungsinformation zugeordnet ist, wobei im Zuge des Transfers von einem lokalen Anwendungsspeicher (H1, H2) zu einem weiteren Anwendungsspeicher (H1, H2) eine Erfüllung der Weiterleitungsinformation geprüft und ggf. der Transfer entsprechend eingeschränkt oder freigegeben wird, wobei die Weiterleitungsinformation zumindest eine der nachfolgend beschriebenen Informationen darüber umfasst, ob eine Übertragung überhaupt gestattet ist, wie oft eine Übertragung erlaubt ist, wie oft und/oder wie lange eine Installation oder ein Betrieb der jeweiligen Anwendung auf Automatisierungskomponenten (IED), die dem Ziel-Anwendungsspeicher (H1, H2) zugeordnet sind, erlaubt ist, und/oder ob die Übertragung zu einem lokalen Anwendungsspeicher (H1, H2) einer anderen als der Automatisierungsanordnung (A1, A2) mit dem übertragenden lokalen Anwendungsspeicher (H1, H2) gestattet ist.

3. Verfahren nach Patentanspruch 2,
**dadurch gekennzeichnet,**
**dass** einer oder jeder Automatisierungsanordnung (A1, A2) oder lokalen Anwendungsspeicher (H1, H2) eine Identitätsinformation, insbesondere eine Firmenidentität, zugeordnet wird, wobei in der Weiterleitungsinformation eine Anzahl erlaubter Identitäten definiert wird, wobei eine Übertragung nur an einen solchen weiteren lokalen Anwendungsspeicher (H1, H2) erlaubt ist, dem selbst dieselbe Identitätsinformation zugeordnet ist oder der einer Automatisierungsanordnung (A1, A2) mit derselben zugeordneten Identitätsinformation zugeordnet ist, die einer der erlaubten Identitäten entspricht, wobei im Zuge des Transfers der Anwendung diese Entsprechung geprüft und die ggf. der Transfer entsprechend eingeschränkt oder freigegeben wird.

4. Verfahren nach Patentanspruch 3,
**dadurch gekennzeichnet,**
**dass** zumindest die in der Weiterleitungsinformation definierte zu übertragende Anwendung mit einer manipulationsgeschützten Signatur signiert wird.

5. Verfahren nach einem der Patentansprüche 2 bis 4,
**dadurch gekennzeichnet,**
**dass** eine kommerzielle Anwendung gemäß einem der vorstehend beschriebenen Verfahren mit einer Lizenz zur Weiterleitung versehen und von einem lokalen Anwendungsspeicher (H1, H2) zu einem weiteren lokalen Anwendungsspeicher (H1, H2) übertragen wird.

6. Verfahren nach einem der vorhergehenden Patentansprüche,
**dadurch gekennzeichnet,**
**dass** dem lokalen Anwendungsspeicher (H1, H2) eine Anzahl Lizenzen für Übertragungen von Anwendungen zugeordnet werden,
wobei mit jeder Übertragung eine der Lizenzen entwertet wird, und
wobei eine Übertragung nur dann stattfindet, wenn eine freie Lizenz dazu vorhanden ist.

7. Verfahren nach Patentanspruch 6,
**dadurch gekennzeichnet,**
**dass** eine Lizenz mit einer Anzahl Bedingungen versehen ist, insbesondere darüber, ob nur kundenindividuelle oder auch kommerzielle Anwendungen übertragen werden dürfen, ob an lokale Anwendungsspeicher (H1, H2) der eigenen Automatisierungsanordnung oder auch an lokale Anwendungsspeicher (H1, H2) einer anderen Automatisierungsanordnung (A1, A2) übertragen werden darf, und/oder hinsichtlich der maximalen Betriebsdauer einer übertragenen Anwendung.

8. Verfahren nach einem der vorhergehenden Patentansprüche,
**dadurch gekennzeichnet,**
**dass** jede der Automatisierungskomponente (IED) einem, bevorzugt genau einem, lokalen Anwendungsspeicher (H1, H2) zugeordnet und aus diesem mit Anwendungen versorgt wird.

9. Verfahren nach einem der vorhergehenden Patentansprüche,
**dadurch gekennzeichnet,**
**dass** jeder Automatisierungsanordnung (A1, A2) ein, bevorzugt genau ein, eigener lokaler Anwendungsspeicher (H1, H2) zugewiesen oder zugefügt wird.

10. Anwendungsspeicher (H1, H2) für eine industrielle Automatisierungsanordnung (A1, A2),
wobei der Anwendungsspeicher (H1, H2) als lokaler Anwendungsspeicher (H1, H2) zum Laden von kommerziellen Anwendungen aus einem öffentlichen Anwendungsspeicher (MP), insbesondere einem App-Store oder digitalem Marktplatz, und eingerichtet ist,
wobei der lokale Anwendungsspeicher (H1, H2) dazu eingerichtet ist, geladene Anwendungen zumindest einer der Automatisierungsanordnung zugehörigen Automatisierungskomponente (IED) zur Verfügung zu stellen, insbesondere zum Download und zur Ausführung,
**dadurch gekennzeichnet,**
**dass** der lokale Anwendungsspeicher (H1, H2) zum Empfang einer kundenindividuellen Anwendung aus einer anderen Quelle als dem öffentlichen Anwendungsspeicher (MP) eingerichtet ist,
wobei die andere Quelle insbesondere ein der Automatisierungsanordnung zugeordnetes Entwicklungssystem ist, dass der lokale Anwendungsspeicher (H1, H2) zur Übertragung zumindest der kundenindividuellen Anwendung zu einem anderen lokale Anwendungsspeicher (H1, H2) eingerichtet ist, und
**dass** der lokale Anwendungsspeicher (H1, H2) zum Empfang einer übertragenen Anwendung von einem anderen lokalen Anwendungsspeicher (H1, H2) eingerichtet ist.

11. Anwendungsspeicher (H1, H2) nach Patentanspruch 10,
**dadurch gekennzeichnet,**
**dass** zumindest eine oder jede in diesem lokalen Anwendungsspeicher (H1, H2) gespeicherte Anwendung mit einer Weiterleitungsinformation versehen ist, die eine Weiterleitung der jeweiligen Anwendung zu einem anderen lokalen Anwendungsspeicher (H1, H2) reglementiert, insbesondere gemäß einem oder mehreren Kriterien gemäß Patentanspruch 2 oder 3,
und **dass** der übertragende lokale Anwendungsspeicher (H1, H2) dazu eingerichtet ist, im Zuge der Übertragung die Erfüllung der Kriterien zu Überprüfen und die Übertragung entsprechend einzuschränken.

12. Anwendungsspeicher (H1, H2) nach Patentanspruch 11,
**dadurch gekennzeichnet,**
**dass** dieser lokale Anwendungsspeicher (H1, H2) mit einem Lizenzserver verknüpft ist, wobei der Lizenzserver zumindest einen Teil der Weiterleitungsinformationen zu verschiedenen der Anwendungen dem lokalen Anwendungsspeicher (H1, H2) zur Verfügung stellt,
und wobei der lokale Anwendungsspeicher (H1, H2) zum Abruf und Überprüfung dieser Weiterleitungsinformationen im Zuge einer Übertragung einer Anwendung eingerichtet ist.

13. Anwendungsspeicher (H1, H2) nach Patentanspruch 12,
**dadurch gekennzeichnet,**
**dass** dieser lokale Anwendungsspeicher (H1, H2) dazu eingerichtet ist, aus dem oder einem anderen Lizenzserver zumindest eine Lizenz für eine Kontrolle der Übertragung nach einem der Patentansprüche 6 oder 7 zu empfangen und die Übertragung gemäß den Bedingungen dieser Lizenz zu reglementieren.

14. Anwendungsspeicher (H1, H2) nach einem der Patentansprüche 10 bis 13,
**dadurch gekennzeichnet,**
**dass** der lokale Anwendungsspeicher (H1, H2) zur Versorgung von einem industriellen Edge-Gerät als Automatisierungskomponente (IED) mit Anwendungen eingerichtet ist, wobei der lokale Anwendungsspeicher (H1, H2) zur Speicherung und Übertragung von in Containern gespeicherten Anwendungen und zur Kontrolle der Installation und des Betriebs dieser Container in einer Container-Laufzeitumgebung des Edge-Gerätes eingerichtet ist.

15. Anwendungsspeicher (H1, H2) nach einem der Patentansprüche 10 bis 14,
**dadurch gekennzeichnet,**
**dass** der lokale Anwendungsspeicher (H1, H2) mit einer Bereitstellungskomponente verbunden oder mit einer solchen ausgestattet ist,
wobei die Bereitstellungskomponente zur Bereitstellung einer kundenindividuellen Anwendung, insbesondere einer kundenindividuellen Anwendung, an einen ersten der lokalen Anwendungsspeicher (H1, H2) eingerichtet ist.

16. Anwendungsspeicher (H1, H2) nach Patentanspruch 15,
**dadurch gekennzeichnet,**
**dass** die Bereitstellung mittels eines Protokolls eines öffentlichen Anwendungsspeichers (MP) erfolgt, und wobei der lokale Anwendungsspeicher (H1, H2) zum Empfang der Anwendung mittels desselben Protokolls eingerichtet ist.
